(19) Europäisches Patentamt
European Patent Office
Office européen des brevets

(11) Veröffentlichungsnummer: **0 023 890**
**B1**

(12) # EUROPÄISCHE PATENTSCHRIFT

(45) Veröffentlichungstag der Patentschrift: **01.02.84**

(21) Anmeldenummer: **80810239.6**

(22) Anmeldetag: **31.07.80**

(51) Int. Cl.³: **C 07 C 131/00,** A 01 N 37/50 // A01N37/02, A01N41/04, A01N41/06, A01N41/10, A01N47/06, A01N47/12, A01N47/24, A01N51/00, C07C121/75, C07C143/00, C07C143/72, C07C147/02, C07C153/09, C07C43/263, C07C69/14

(54) **Neue Oximäther und Oximester von Diphenyläthern, ihre Herstellung und Verwendung in herbiziden Mitteln.**

(30) Priorität: **06.08.79 CH 7197/79**

(43) Veröffentlichungstag der Anmeldung: **11.02.81 Patentblatt 81/6**

(45) Bekanntmachung des Hinweises auf die Patenterteilung: **01.02.84 Patentblatt 84/5**

(84) Benannte Vertragsstaaten: **BE CH DE FR GB IT LI NL**

(56) Entgegenhaltungen:
**BE - A - 870 068**
**FR - A - 2 387 945**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Pissiotas, Georg, Dr., Breslauerstrasse 8, D-7850 Lörrach (DE)**
Erfinder: **Rohr, Otto, Dr., Kilbertweg 19, CH-4106 Therwil (CH)**

**EP 0 023 890 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Neue Oximäther und Oximester von Diphenyläthern, ihre Herstellung und Verwendung in herbiziden Mitteln

Die vorliegende Erfindung betrifft neue Oximäther und Oximester von Diphenyläthern, Verfahren zu deren Herstellung, sie enthaltende herbizide Mittel, woei deren Verwendung als Herbizide und den Pflanzenwuchs hemmende Mittel oder als Safener, d. h. antagonistisch wirkende Gegenmittel zu solchen Agrarchemikalien, welche, wenn allein angewendet, an gewissen Kulturen phytotoxische Schäden antrichten würden.

Aus dem Stand der Technik sind herbizid wirkende Diphenyloxyalkansäuren bekannt geworden, siehe beispielsweise die DOS-2 136 828, 2 433 067 etc. aber auch herbizide Phenoxy-benzoesäuren, siehe die DOS-2 784 635. Diphenyloxim-Verbindungen sind kürzlich im belgischen Patent 870 068 beschrieben worden. Die Oximäther und Oximester von Diphenyläthern vorliegender Erfindung vermögen beispielsweise Unkräuter der Gattungen Galium, Veronika und Viola in Getreidekulturen zu kontrollieren, was bisher mit Selektivherbiziden nur ungenügend gelang. Die erfindungsgemäßen Verbindungen eignen sich sehr gut zur selektiven Bekämpfung von Unkraut in Reiskulturen, während die Wirkung der aus BE-A-870 068 bekannten isomeren Verbindungen viel schwächer ist.

Die erfindungsgemäßen Oximäther und Oximester von Diphenyläthern entsprechen der Formel I

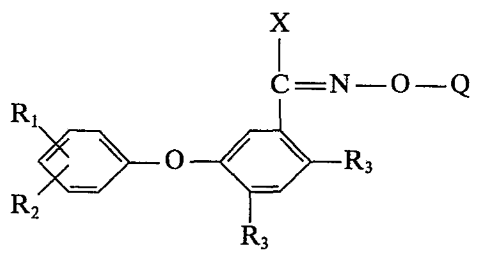

(I)

worin $R^1$ Halogen, oder eine der Gruppen Nitro, Cyan oder Trifluormethyl, $R_2$ und $R_3$ je Wasserstoff, Halogen oder eine der Gruppen Nitro oder Cyan, $R_4$ Wasserstoff oder Halogen, X Wasserstoff, Halogen oder eine der Gruppen Cyan, Nitro, Niederalkyl, Niederalkanoyl, Carbonsäureniederalkylester oder Carbonsäureamid, Q ein niederes Alkyl, das geradkettig oder verzweigt ist oder durch Heteroatome unterbrochen oder durch Halogen substituiert sein kann, ein niederes Alkenyl oder Halogenalkenyl, ein niederes Alkinyl, ein gegebenenfalls durch Halogen substituiertes $C_3-C_7$-Cycloalkyl, ein niederes Cyanalkyl, eine niedere Alkancarbonsäureester-Gruppe, Alkanthiocarbonsäureester-Gruppe, eine niedere Alkancarbonsäureamid-Gruppe, einen aliphatischen Acylrest, einen araliphatischen, cycloaliphatischen oder gegebenenfalls substituierten aromatischen bzw. heterocyclischen Acylrest, einen aliphatischen, araliphatischen, cycloaliphatischen oder gegebenenfalls substituierten aromatischen bzw. heterocyclischen Kohlensäureesterrest, eine Alkylsulfonsäure oder einen Sulfonsäureamidrest oder einen Carbamoylrest bedeutet.

In der Formel I ist unter Halogen, Fluor, Chlor, Brom oder Jod zu verstehen.

Der Ausdruck Alkyl allein oder als Teil eines Substituenten umfaßt verzweigte oder unverzweigte $C_1$- bis $C_8$-Alkylgruppen, Niederalkyl bedeutet $C_1-C_4$-Alkyl. Beispiele sind Methyl, Äthyl, Propyl, Isopropyl, Butyl, Isobutyl, sec. Butyl, tert. Butyl, sowie die höheren Homologen Amyl, Isoamyl, Hexyl, Heptyl, Octyl samt ihren Isomeren. Sinngemäß enthalten Cyanalkyle ein und Alkancarbonsäureester mindestens zwei zusätzliche C-Atome.

Alkenyle bedeuten aliphatische Reste mit ein oder auch zwei Doppelbindungen (»Alkadienyle«) und maximal 6, bevorzugt 4 C-Atomen. Halogenalkenyle enthalten bis zu 3 Halogenatome, bevorzugt Chlor oder Brom. Alkinyl bedeutet Propinyl (Propargyl) und Butinyl.

Carbonsäureamide umfassen auch mono- oder symmetrisch oder unsymmetrisch di-substituierte Amide, wobei die Substituenten wahlweise Niederalkyl, Niederalkenyl, Propinyl oder Butinyl sowie einmal ein Phenylring sein können, der substituiert oder unsubstituiert sein kann.

$C_3-C_7$ Cycloalkylgruppen sind Cyclopropyl, Cyclobutyl, Cyclopentyl, Cyclohexyl und Cycloheptyl, Cycloaliphatische Reste entsprechen diesen Ringsystemen, können daneben aber noch, je nach Möglichkeit, eine oder mehrere Doppelbindungen enthalten.

Ein araliphatischer Rest umfaßt eine Arylgruppe wie gegebenenfalls ein- bis dreifach substituiertes Phenyl, oder auch Naphthyl, Fluorenyl, Indanyl, das über Niederalkyl oder Niederalkenyl an den Rest des Moleküls gebunden ist. Beispiele sind die Grundkörper Benzyl, Phenäthyl, Phenylallyl sowie Homologe.

Aromatische Carbonsäuren leiten sich von Aromaten wie vor allem Phenyl ab und können substituiert sein. Heterocyclische Carbonsäuren leiten sich von mono- oder bicyclischen Ringen mit 1 bis 3 gleichen oder verschiedenen Heteroatomen O, S und N ab. Zu nennen wären 3- bis 6-, vor allem 5- oder 6gliedrige Heterocyclen, die gesättigt, teilgesättigt oder ungesättigt und gegebenenfalls substituiert sein können. Als Beispiele, die keine Limitierung darstellen sollen, seien genannt: Furan, Nitrofuran, Bromfuran, Methylfuran, Thiophen, Chlorthiophen, Pyridin, 2,6-Dichlorpyridin, Pyrimidin, Pyridazin, Pyrazin, Piperidin, Methylpiperidin, Morpholin, Thiomorpholin, Tetrahydrofuran, Oxazol,

Pyrazol, Pyrrol, Pyrrolin, Pyrrolidin, Thiazol, 2,3-Dihydro-4H-pyran, Pyran, Dioxan, 1,4-Oxathi-(2)-in.

Beispiele für durch Heteroatome unterbrochene aliphatische Ketten sind Methoxyäthyl, Aethoxyäthyl, Propoxyäthyl, Butoxyäthyl, Methoxypropyl, Aethylthioäthyl, Methylaminoäthyl, tert. Butylaminoäthyl, Alkoxyalkoxyalkyl wie Methoxyäthoxyäthyl.

Ein Carbamoylrest

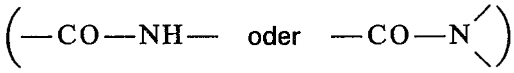
oder

trägt am N-Atom ein oder zwei Reste aus der Gruppe Niederalkyl, Niederalkoxyalkyl, Niederalkenyl, Niederhaloalkenyl, Alkinyl oder ein Wasserstoffatom und wahlweise einen $C_3$—$C_6$ Cycloalkyl- oder aber einen Phenylring der unsubstituiert ist, oder, wie für $R_2/R_3$ angegeben, substituiert sein kann.

Bevorzugt sind solche Wirkstoffe der Formel I, in denen X die Cyanogruppe darstellt und Q ein Ester-Rest

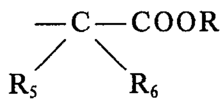

ist, worin R Niederalkyl, $R_5$ Wasserstoff oder Niederalkyl, $R_6$ Wasserstoff, Niederalkyl oder Niederalkoxy darstellt, $R_3$ durch Halogen und $R_4$ durch Wasserstoff verkörpert ist und $R_1$ und $R_2$ sich in ortho- oder para-Stellung zur Diphenylätherbindung befinden.

Ferner ist $R_1$ vorzugsweise para-ständiges $CF_3$ $R_2$ ortho-ständiges Chlor, d. h. der substituierte Phenoxyrest hat die Form

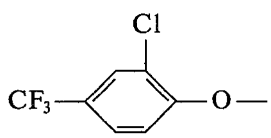

Die Herstellung der Verbindungen der Formel I erfolgt nach an sich bekannten Methoden.

Gemäß einer ersten Methode setzt man Halogenbenzol der Formel II

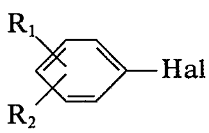
(II)

worin $R_1$ und $R_2$ die gegebene Bedeutung haben, mit einem meta-Hydroxybenzoesäureester der Formel III

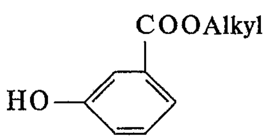
(III)

in Gegenwart einer Base um, wobei man einen Diphenyläther der Formel IV erhält.

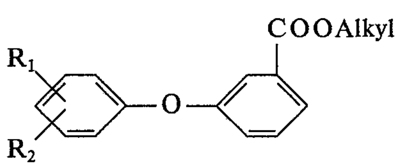
(IV)

Dieser Diphenyläther wird in einem inerten organischen Lösungsmittel mit Lithium-aluminiumhydrid oder einem anderen Reduktionsmittel behandelt, bis die Estergruppe reduziert ist. Man erhält so einen meta-Hydroxymethyldiphenyläther der Formel V

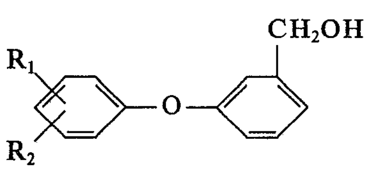
(V)

worin $R_1$ und $R_2$ die gegebene Bedeutung haben.

In diesem Stadium wird die Hydroxymethylgruppe durch Verestern z. B. mit einer Fettsäure, beispielsweise Essigsäure geschützt und dann die Substituenten $R_3$ und gegebenenfalls $R_4$ eingeführt, durch Nitrieren, Halogenieren oder gegebenenfalls Reduzieren der Nitrogruppe in eine Aminogruppe und Auswechseln derselben durch einen andern Substituenten in einer Sandmeier-Reaktion, oder auch durch Reaktion eines Halogen-Substituenten mit Kaliumcyanid. Man erhält so einen Diphenylmethoxyester der Formel VI,

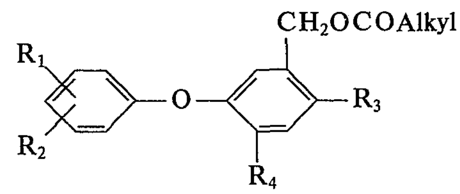

(VI)

worin $R_1$, $R_2$, $R_3$ und $R_4$ die gegebene Bedeutung haben.

Durch Verseifen mit einer anorganischen Base wird die Fettsäure-Schutzgruppe wieder abgespalten und die Hydroxymethylgruppe anschließend mit Thionylchlorid oder Phosphoroxychlorid, Thionylbromid oder Phosphoroxybromid zum Halogenmethyldiphenyläther der Formel VII überführt,

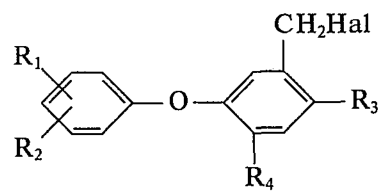

(VII)

worin Hal Chlor oder Brom bedeutet und $R_1$, $R_2$, $R_3$ und $R_4$ die gegebene Bedeutung haben.

Dieses wird mit Kalium- oder Natriumcyanid in das entsprechende Cyanomethylderivat ($-CH_2-CN$) überführt. Durch Umsetzen des letzteren z. B. mit Pentylnitrit $C_5H_{11}ON=O$ in Gegenwart von Natriumäthylat erhält man ein Oximsalz der Formel VIII

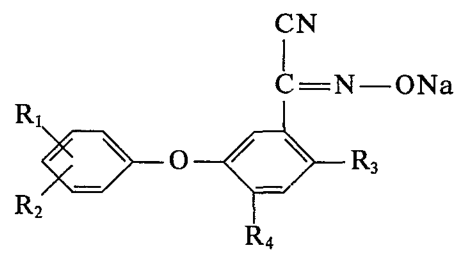

(VIII)

worin $R_1$, $R_2$, $R_3$ und $R_4$ die gegebene Bedeutung haben.

Ein erfindungsgemäßes Verfahren zur Herstellung der Oximäther der Formel I ist dadurch gekennzeichnet, daß man das Diphenylätheroximsalz der obigen Formel VIII in einem inerten organischen Lösungsmittel mit einer Verbindung der Formel IX umsetzt,

$$Y-Q \qquad (IX)$$

worin Y ein Halogenatom oder einen abspaltbaren Säurerest bedeutet und Q die gegebene Bedeutung hat.

Ein weiterer Weg zur Synthese von Verbindungen der Formel I besteht darin, daß man das Halogenbenzol der Formel II in einem inerten, organischen Lösungsmittel, in Gegenwart einer Base mit einem meta-Hydroxy-benzaldehyd oder einem meta-Hydroxy-phenylketon der Formel XI umsetzt,

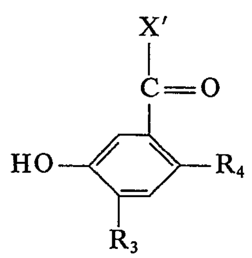

(XI)

worin X' Wasserstoff oder einen niederen Alkylrest bedeutet und $R_3$ und $R_4$ die gegebene Bedeutung

haben. Man erhält so ein Diphenyl-aldehyd oder -keton der Formel XIII

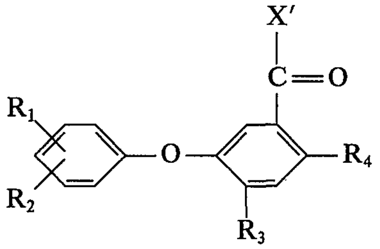

(XIII)

worin X' Wasserstoff oder Niederalkyl beduten und $R_1$, $R_2$, $R_3$ und $R_4$ die gegebene Bedeutung haben. Dieses wird mit Hydroxylamin $NH_2OH$ in ein Oxim der Formel XIV überführt,

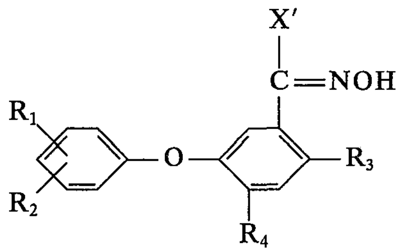

(XIV)

worin $R_1$, $R_2$, $R_3$, $R_4$ und X' die gegebene Bedeutung haben. Dieses Oxim wird durch Umsetzen mit einer Verbindung der Formel IX in einem organischen Lösungsmittel in Gegenwart einer Base zu einem Oximäther der Formel I umgesetzt, in dem X Wasserstoff oder Niederalkyl bedeutet. Durch Umsetzen derjenigen Oximäther der Formel I, in denen X Wasserstoff bedeutet, mit den entsprechenden Reagentien, kann schließlich der Wasserstoff durch andere, unter der Definition von X gegebene Reste ausgetauscht werden.

Diese Umsetzungen werden bei Temperaturen zwischen 0°C und 150°C und in geeigneten Lösungsmitteln, wie Aceton, Methyläthylketon, Acetonitril, Dimethylformamid, Dimethylsulfoxid durchgeführt.

Als Basen eignen sich sowohl anorganische Basen wie Alkalimetallhydroxide, Alkali- und Erdalkalimetall-carbonate und -bicarbonate, aber auch trockener Ammoniak, sowie organische Basen, wie beispielsweise tertiäre Niederalkylamine, wie Triäthylamin, Trimethylamin oder auch cyclische Amine z. B. Pyridin, Collidin oder auch aromatische Amine wie Dimethylanilin.

Abspaltbare Säurereste Y sind z. B. eine Alkylsulfonylgruppe, eine Arylsulfonylgruppe, eine Nitrogruppe, oder ein halogenierter Fettsäurerest wie z. B. Trichloressigsäurerest.

Diese und andere Kondensationen von $\alpha$-Oximino-Verbindungen und ihrer Alkalimetallsalze mit reaktionsfähigen Partnern Y—Q sind in »Organic Reactions« 1953, Band 7, Seite 343 und 373 beschrieben.

Oxime existieren immer in zwei stereoisomeren Formen, der syn- und anti-Form. Im Rahmen vorliegender Beschreibung sind beide stereoisomeren Formen für sich und als Gemische in beliebigem gegenseitigen Mischungsverhältnis zu verstehen.

Die Wirkstoffe der Formel I sind stabile Verbindungen, welche in üblichen organischen Lösungsmitteln wie Alkoholen, Aethern, Ketonen, Dimethylformamid, Dimethylsulfoxyd etc. löslich sind.

Die Wirkstoffe der Formel I können für sich allein, aber vorteilhafter zusammen mit geeigneten Trägerstoffen und/oder anderen Zuschlagstoffen in Form herbizider Mittel zur Unkrautbekämpfung verwendet werden.

Es handelt sich dabei um Wirkstoffe bzw. Mittel, welche in Aufwandmengen von 0,5 bis 4 kg/ha und mehr eine ausgesprochene herbizide Wirkung insbesondere auf dikotyle Unkräuter besitzen, wie Sida, Sesbania, Amaranthus, Sinapis, Ipomoea, Galium, Pastinak, Rumex, Matricaria, Chrysanthemum, Abutilon, Solanum etc. einige aber auch bei höheren Aufwandmengen von mindestens 2 bis 4 kg/ha auf monokotyle Unkräuter wie Digitaria, Setaria und Echinochloa wirken, während monokotyle Kulturpflanzen wie Gerste, Weizen, Mais, Hafer und Reis bei niederen Aufwandmengen praktisch ungeschädigt bleiben und bei höheren Aufwandmengen nur schwach geschädigt werden. Es wurden gute praktische Ergebnisse zur selektiven Bekämpfung von insbesondere dikotylen Unkräutern in Kulturen von Getreide, Mais und Reis mit diesen Wirkstoffen erzielt. Am besten haben sich dabei diejenigen Verbindungen bewährt, welche die Struktur folgender Formel besitzen

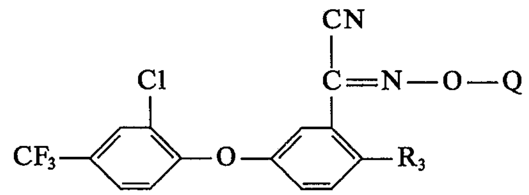

worin $R_3$ Chlor oder Nitro bedeutet und Q die unter Formel I gegebene Bedeutung hat.

Die Wirkstoffe bzw. die sie enthaltenden Mittel können preemergent auf angesäte Kulturflächen, aber vorzugsweise post-emergent auf verunkrautete Kulturpflanzenbestände als »Kontaktherbizide« appliziert werden.

Die Herstellung erfindungsgemäßer Mittel erfolgt in an sich bekannter Weise durch inniges Vermischen und Vermahlen von Wirkstoffen der allgemeinen Formel I mit geeigneten Trägerstoffen und/oder Verteilungsmitteln, gegebenenfalls unter Zusatz von gegenüber den Wirkstoffen inerten Antischaum-, Netz-, Dispersions- und/oder Lösungsmitteln. Die Wirkstoffe können in den folgenden Aufarbeitungsformen vorliegen und angewendet werden:

Feste Aufarbeitungsformen:
Stäubemittel, Streumittel, Granulate, Umhüllungsgranulate, Imprägniergranulate und Homogengranulate;
In Wasser dispergierbare Wirkstoffkonzentrate:
Spritzpulver (wettable powder), Pasten, Emulsionen, Emulsionskonzentrate;
Flüssige Aufarbeitsformen: Lösungen.

In den nachfolgenden Beispielen wird die Herstellung der Wirkstoffe, diejenige gebrauchsfertiger Anwendungsformen oder Wirkstoffkonzentrate sowie die Versuchsanordnung zur Feststellung der herbiziden Wirkung näher beschrieben. Temperaturangaben beziehen sich auf Grad Celsius. Druckangaben sind in Millibar gegeben, Teile und Prozentangaben beziehen sich auf das Gewicht.

## Beispiel 1

Herstellung von 2-Chlor-5-(2′-chlor-4′-trifluormethylphenoxy)-phenyl-acetonitril-oxim-(methoxycarbonyl-äth-1″-yl)-äther

a) 4 g Lithium-alumuniumhydrid wurden in 250 ml absolutem Äther bei Raumtemperatur vorgelegt. Unter Rühren und unter Stickstoffatmosphäre wurden 45 g 3-(2-Chlor-4-trifluormethylphenoxy),-benzoesäuremethylester (erhalten durch Umsetzung von 3,4-Dichlorbenzotrifluorid und 3-Hydroxybenzoesäuremethylester) gelöst in 60 ml absolutem Äther in der Weise zugetropft, daß das Reaktionsgemisch mäßig am Sieden gehalten wurde. Nach Beendigung des Zutropfens wurde 1 Stunde unter Rückfluß weitergerührt. Zur Vernichtung des restlichen Lithium-aluminiumhydrides wurden 5 ml Essigester zugegeben und anschließend so viel 10%ige wäßrige Ammoniumchloridlösung dazugetropft, bis sich ein gut abfiltrierbarer Niederschlag gebildet hatte. Nach dem Abfiltrieren wurde die ätherische Phase abgetrennt und die wäßrige Phase zweimal mit Äther ausgeschüttelt.

Die vereinigten Ätherphasen wurden nach dem Trocknen eingedampft. Man erhielt so 35,6 g eines öligen Produktes der Formel

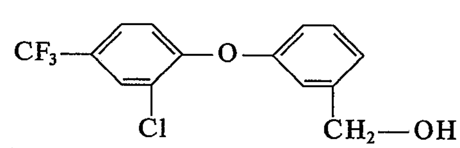

$n_D^{25}$ 1.5424

b) 30,2 g der unter a) erhaltenen Verbindung wurden in 350 ml Eisessig vorgelegt und bei einer Temperatur von 20—25°C so lange Chlor eingeleitet, bis das Ausgangsmaterial verbraucht wurde. Anschließend wurde unter Vakuum eingedampft, der ölige Rückstand in Äther aufgenommen und zweimal mit Wasser gewaschen. Nach dem Trocknen über Natriumsulfat wurde erneut eingeengt. Man erhielt so 38 g einer Verbindung der Formel

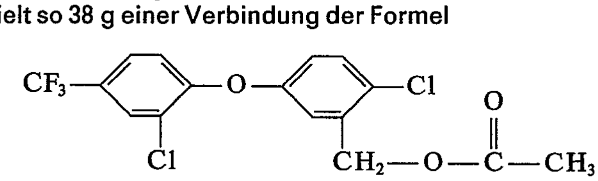

als Öl.

c) 38 g des oben erhaltenen Acetates wurden in 200 ml Methanol gelöst und mit 36 ml 3,5 N Natronlauge bei Raumtemperatur eine halbe Stunde lang behandelt. Danach wurde mit Äther extrahiert, die Ätherphase dreimal mit Wasser gewaschen und getrocknet. Nach dem Eindampfen erhielt man 32,5 g der Verbindung der Formel

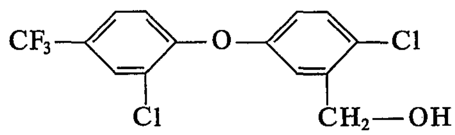

als Öl mit $n_D^{37}$ 1,5536.

d) 20 g des unter c) erhaltenen Alkohols wurden in 50 ml Toluol gelöst und mit 4,5 ml Thionylchlorid bei Raumtemperatur tropfenweise versetzt. Nachdem die Gasentwicklung nachgelassen hat, wurde langsam aufgeheizt und das Reaktionsgemisch 6 Stunden unter Rückfluß gehalten.

Nach dem Eindampfen unter Vacuum erhält man 20 g der Verbindung der Formel

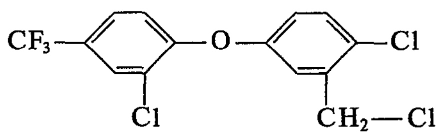

als Öl.

e) 20 g der unter d) erhaltenen Verbindung 100 ml Dimethylsulfoxyd wurden bei Raumtemperatur vorgelegt. Dann wurden 9,4 g Natriumcyanid unter Rühren portionsweise dazugegeben, wobei die Temperatur bei 20—25° gehalten wurde. Danach wurde das Reaktionsgemisch zwei Stunden nachgerührt und schließlich auf Eis/Wasser gegossen, mit Äther extrahiert, die ätherische Phase dreimal mit Wasser gewaschen und über Natriumsulfat getrocknet und eingedampft. Man erhielt ein Produkt der Formel

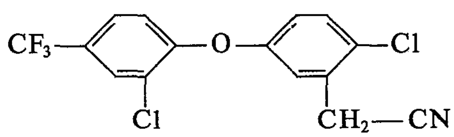

in einer Ausbeute von 13,9 g. Siedepunkt 143°/0,01 mbar.

f) In einer Lösung aus 50 ml Äthanol und 2,3 g Natriumäthylat wurden 11,4 g des unter e) erhaltenen Nitrils gelöst und mit 4,4 ml Isopentylnitrit tropfenweise bei Raumtemperatur versetzt. Danach wurde das Reaktionsgemisch über Nacht weitergeführt und mit 100 ml Hexan gefällt. Nach dem Abfiltrieren erhielt man 9,3 g eines Produktes der Formel

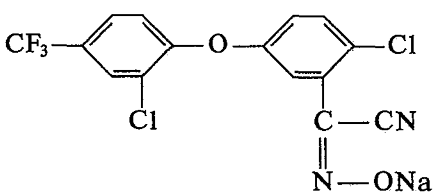

g) 9,3 g Natriumsalz des unter f) erhaltenen Oxims wurden in 50 ml Dimethylformamid gelöst und bei Raumtemperatur mit 4 g 2-Brompropionsäuremethylester tropfenweise versetzt. Nach zwölfstündigem Rühren wurde das Reaktionsgemisch in Wasser gegossen mit Äther extrahiert und die ätherische Lösung über Natriumsulfat getrocknet und eingedampft. Man erhielt so 8,5 g der Verbindung der Formel

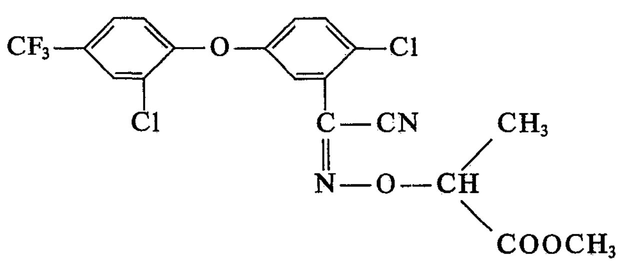

als Öl mit Brechungsindex $n_D^{24}$ 1,5392.

In der folgenden Tabelle sind in analoger Weise hergestellte Wirkstoffe aufgeführt:

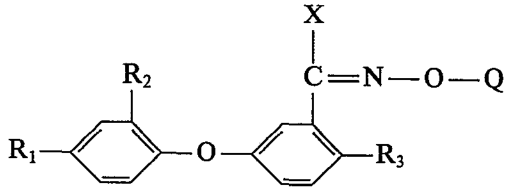

| Verb. Nr. | $R_1$ | $R_2$ | $R_3$ | X | Q |
|---|---|---|---|---|---|
| 1 | $CF_3$ | Cl | Cl | CN | $CH(CH_3)COOCH_3$ $n_D^{23}$ 1.5392 |
| 2 | $CF_3$ | Cl | Cl | CN | $CH(CH_3)COOC_2H_5$ $n_D^{24}$ 1.5310 |
| 3 | $CF_3$ | Cl | Cl | CN | $CH(CH_3)COOC_4H_{9n}$ $n_D^{24}$ 1.5254 |
| 4 | $CF_3$ | Cl | Cl | CN | $CH(CH_3)COOC_4H_9$iso $n_D^{24}$ 1.5220 |
| 5 | $CF_3$ | Cl | Cl | CN | $CH(CH_3)COOCH_2-C{\equiv}CH$ $n_D^{24}$ 1.5458 |
| 6 | $CF_3$ | Cl | Cl | CN | $SO_2N(CH_3)_2$ |
| 7 | $CF_3$ | Cl | Cl | CN | $SO_2CH_3$ |
| 8 | $CF_3$ | Cl | Cl | CN | $SO_2CH_2-C_6H_5$ |
| 9 | $CF_3$ | Cl | Cl | CN | $CH(CH_3)COOC_2H_4N(CH_3)_2$ |
| 10 | $CF_3$ | Cl | Cl | CN | $CH(CH)_3COOC_5H_{11}$iso |
| 11 | $CF_3$ | Cl | Cl | CN | $CH_2CN$ $n_D^{31}$ 1.5490 |
| 12 | $CF_3$ | Cl | Cl | CN | $CH(CH_3)CN$ $n_D^{31}$ 1.5365 |
| 13 | $CF_3$ | Cl | Cl | CN | $CH_2COOCH_3$ $n_D^{24}$ 1.5425 |
| 14 | $CF_3$ | Cl | Cl | CN | $CH(H_3)(OCH_3)-COOCH_3$ $n_D^{31}$ 1.5265 |
| 15 | Cl | Cl | Cl | CN | $CH(CH_3)COOCH_2CH=CH_2$ |
| 16 | Cl | Cl | Cl | CN | $COC_6H_5$ |
| 17 | Cl | Cl | Cl | CN | $CONHC_6H_5$ |
| 18 | Cl | Cl | Cl | CN | $CH_2CONH_2$ |
| 19 | Cl | Cl | Cl | CN | $CH(CH_3)COONH_2$ |
| 20 | $CF_3$ | $NO_2$ | Cl | CN | $CH(CH_3)COOC_3H_{7n}$ |
| 21 | $CF_3$ | $NO_2$ | Cl | CN | $CH(CH_3)COOC_4H_{9n}$ |
| 22 | $CF_3$ | $NO_2$ | Cl | CN | $CH(CH_3)COOCH_2-CH=CH_2$ |
| 23 | $CF_3$ | $NO_2$ | Cl | CN | $CH(CH_3)COOCH_2-C{\equiv}CH$ |
| 24 | $CF_3$ | $NO_2$ | Cl | CN | $CH(CH_3)COOCH_2CH(CH_3)C_3H_7$ |
| 25 | $CF_3$ | $NO_2$ | Cl | CN | $CH_2COOCH_3$ |

| Verb. Nr. | $R_1$ | $R_2$ | $R_3$ | X | Q |
|---|---|---|---|---|---|
| 26 | $CF_3$ | $NO_2$ | Cl | CN | $CH_2COOCH_3$ |
| 27 | $CF_3$ | $NO_2$ | Cl | CN | $SO_2CH_2-C\equiv CH$ |
| 28 | $CF_3$ | $NO_2$ | Cl | CN | $SO_2CH_2-CH_2=CH_2$ |
| 29 | $CF_3$ | $NO_2$ | Cl | CN | $CON(CH_3)_2$ |
| 30 | $CF_3$ | $NO_2$ | Cl | CN | $CONHCM_3$ |
| 31 | $CF_3$ | Cl | $NO_2$ | CN | $CH(CH_3)CN$ |
| 32 | $CF_3$ | Cl | $NO_2$ | CN | $CH(CH_3)COOCH_3$ |
| 33 | $CF_3$ | Cl | $NO_2$ | CN | $CH(CH_3)COOC_4H_{9n}$ |
| 34 | $CF_3$ | Cl | $NO_2$ | CN | $CH(CH_3)CONH_2$ |
| 35 | $CF_3$ | Cl | $NO_2$ | CN | $CH(CH_3)CON(CH_3)_2$ |
| 36 | $CF_3$ | Cl | $NO_2$ | CN | $CH(CH_3)COOCH_2C\equiv CN$ |
| 37 | $CF_3$ | Cl | $NO_2$ | CN | $CH(CH_3)SO_2N(CH_3)_2$ |
| 38 | $CF_3$ | Cl | $NO_2$ | CN | $CH(CH_3)SO_2CH_6H_5$ |
| 39 | $CF_3$ | Cl | $NO_2$ | CN | $COONHC_6H_5$ |
| 40 | $CF_3$ | Br | $NO_2$ | CN | $CH_2COOCH_3$ |
| 41 | $CF_3$ | Br | Cl | CN | $CH_2COOC_2H_5$ |
| 42 | $CF_3$ | Br | Cl | CN | $CH(CH_3)COOCH_3$ |
| 43 | $CF_3$ | Br | Cl | CN | $CH(CH_3)CONHCH_3$ |
| 44 | $CF_3$ | Br | Cl | CN | $CH(CH_3)COOCH_2C_6H_5$ |
| 45 | $CF_3$ | Br | Cl | CN | $CH(CH_3)CONHC_6H_4Cl$(para) |
| 46 | $CF_3$ | Br | Cl | CN | $CH(CH_3)CONHC_6H_3Cl(3', 4')$ |
| 47 | $CF_3$ | Br | Cl | CN | $CH(CH_3)CON(CH_3)OCH_3$ |
| 48 | $CF_3$ | Br | Cl | CN | $CH(CH_3)COOC_5H_{11}$iso |
| 49 | $CF_3$ | Br | Cl | CN | $CH(CH_3)COOC_4H_9$sec |
| 50 | $CF_3$ | Br | Cl | CN | $CH(CH_3)COOC_3H_7$iso |
| 51 | Cl | Cl | $NO_2$ | CN | $CH(CH_3)CONHC_6H_4CH_3(3')$ |
| 52 | Cl | Cl | $NO_2$ | CN | $CH(CH_3)CONHC_6H_4Cl(4')$ |
| 53 | Cl | Cl | $NO_2$ | CN | $CH(CH_3)CON(CH_3)$ |
| 54 | Cl | Cl | $NO_2$ | CN | $CH(CH_3)SO_2CH_3$ |
| 55 | Cl | Cl | $NO_2$ | CN | $CH(CH_3)SO_2CH_2C_6H_6$ |
| 56 | Cl | Cl | $NO_2$ | CN | $CH(CH_3)SO_2CH_2C\equiv CH$ |

| Verb. Nr. | $R_1$ | $R_2$ | $R_3$ | X | Q |
|---|---|---|---|---|---|
| 57 | Cl | Cl | $NO_2$ | CN | $CH(CH_3)COOCH_3$ |
| 58 | Cl | Cl | $NO_2$ | CN | $CH(CH_3)COOC_2H_5$ |
| 59 | Cl | Cl | $NO_2$ | CN | $CH(CH_3)COOC_2H_4N(CH_3)_2$ |
| 60 | Cl | Cl | $NO_2$ | CN | $CH(CH_2)COOC_4H_{9n}$ |
| 61 | $CF_3$ | Cl | CN | CN | $CH_2COOCH_3$ |
| 62 | $CF_3$ | Cl | CN | CN | $CH_2COOC_2H_5$ |
| 63 | $CF_3$ | Cl | CN | CN | $CH(CH_3)COOCH_3$ |
| 64 | $CF_3$ | Cl | CN | CN | $CH(CH_3)COOC_2H_5$ |
| 65 | $CF_3$ | Cl | CN | CN | $CH(CH_3)CONH_2$ |
| 66 | $CF_3$ | Cl | CN | CN | $CH(CH_3)CON(CH_3)_2$ |
| 67 | $CF_3$ | Cl | CN | CN | $CH(CH_3)CONHC_6H_5$ |
| 68 | $CF_3$ | Cl | CN | CN | $CN(CH_3)CONHC_6H_4CF_3(3')$ |
| 69 | $CF_3$ | Cl | CN | CN | $CH(CH_3)SO_2CH_3$ |
| 70 | $CF_3$ | Cl | CN | CN | $CH(CH_3)SO_2N(NH_3)_2$ |
| 71 | $CF_3$ | CN | Cl | CN | $CH(CH_3)COOCH_3$ |
| 72 | $CF_3$ | Cl | Cl | CN | $CH(CH_3)COOH$ Harz |
| 73 | $CF_3$ | Cl | Cl | CN | $CH(C_2H_5)COOH$ Harz |
| 74 | $CF_3$ | Cl | Cl | CN | $CH_2COOH$ Harz |
| 75 | $CF_3$ | Cl | Cl | CN | $CH(CH_3)COOC_3H_{7n}$ $n_D^{31}$ 1.5234 |
| 76 | $CF_3$ | Cl | Cl | CN | $CH(CH_3)COOC_2H_7$iso $n_D^{31}$ 1.5181 |
| 77 | $CF_3$ | Cl | Cl | CN | $CH(CH_3)COOC_4H_9$sec $n_D^{31}$ 1.5165 |
| 78 | $CF_3$ | Cl | Cl | CN | $CH(CH_3)COOC_2H_4OCH_3$ $n_D^{28}$ 1.5249 |
| 79 | $CF_3$ | Cl | Cl | CN | $CH(CH_3)CONHC_2H_4OCH_3$ $n_D^{40}$ 1.5387 |
| 80 | $CF_3$ | Cl | Cl | CN | $CH(CH_3)COOCH_2CH{=}CH_2$ $n_D^{24}$ 1.5418 |
| 81 | $CF_3$ | Cl | Cl | CN | $CH(C_2H_5)COOCH_3$ $n_D^{24}$ 1.5368 |
| 82 | $CF_3$ | Cl | Cl | CN | $CH(C_2H_5)COOC_2H_5$ $n_D^{25}$ 1.5303 |
| 83 | $CF_3$ | Cl | Cl | CN | $CH(C_2H_5)COOCH(CH_3)CH_2OCH_3$ $n_D^{28}$ 1.5235 |
| 84 | $CF_3$ | Cl | Cl | CN | $CH(C_2H_5)CN$ $n_D^{30}$ 1.5493 |
| 85 | $CF_3$ | Cl | Cl | CN | $CH(C_3H_{7n})COOCH_3$ $n_D^{23}$ 1.5357 |
| 86 | $CF_3$ | Cl | Cl | CN | $CH(C_2H_5)COOC_3H_{7n}$ $n_D^{25}$ 1.5293 |
| 87 | $CF_3$ | Cl | Cl | CN | $CH(C_2H_5)COOC_4H_{9n}$ $n_D^{25}$ 1.5240 |

| Verb. Nr. | $R_1$ | $R_2$ | $R_3$ | X | Q |
|---|---|---|---|---|---|
| 88 | $CF_3$ | Cl | Cl | CN | $CH(CH_3)COSCH_3$ $n_D^{25}$ 1.5642 |
| 89 | $CF_3$ | Cl | Cl | CN | $CH(CH_3)COSC_2H_5$ $n_D^{25}$ 1.5570 |
| 90 | $CF_3$ | Cl | Cl | CN | $CH(CH_3)COSCH_2CH{=}CH_2$ $n_D^{24}$ 1.5623 |

## Beispiel 2

### Herstellung gebrauchsfertiger Anwendungspräparate und Wirkstoffkonzentrate

### Granulat

Zur Herstellung eines 5%igen Granulates werden die folgenden Stoffe verwendet:

5 Teile eines der Wirkstoffe der Formel I,
0,25 Teile epoxidiertes Pflanzenöl,
0,25 Teile Cetylpolyglykoläther,
3,50 Teile Polyäthylenglykol,
91 Teile Kaolin (Korngröße: 0,3—08 mm).

Die Aktivsubstanz wird mit dem Pflanzenöl vermischt und in 6 Teilen Aceton gelöst, hierauf wird Polyäthylenglykol und Cetylpolyglykoläther zugesetzt. Die so erhaltene Lösung wird auf Kaolin aufgesprüht und anschließend im Vacuum verdampft.

### Spritzpulver

Zur Herstellung eines a) 70%igen und b) 10%igen Spritzpulvers werden folgende Bestandteile verwendet:

a) 70 Teile eines erfindungsgemäßen Wirkstoffs,
5 Teile Natriumdibutylnaphthylsulfonat.
3 Teile Naphthalinsulfonsäuren-Phenolsulfonsäuren-Formaldehyd-Kondensat 3 : 2 : 1,
10 Teile Kaolin,
12 Teile Champagne-Kreide;

b) 10 Teile eines erfindungsgemäßen Wirkstoffs,
3 Teile Gemisch der Natriumsalze von gesättigten Fettalkoholsulfaten,
5 Teile Naphthalinsulfonsäuren-Formaldehyd-Kondensat
82 Teile Kaolin.

Der verwendete Wirkstoff wird auf die entsprechenden Trägerstoffe (Kaolin und Kreide) aufgezogen und anschließend vermischt und vermahlen. Man erhält Spritzpulver von vorzüglicher Benetzbarkeit und Schwebefähigkeit. Aus solchen Spritzpulvern können durch Verdünnung mit Wasser Suspensionen von 0,1—80% Wirkstoff erhalten werden, die sich zur Unkrautbekämpfung in Pflanzenkulturen eignen.

### Paste

Zur Herstellung einer 45%igen Paste werden folgende Stoffe verwendet:

45 Teile eines Wirkstoffs der Formel I,
5 Teile Natriumaluminiumsilikat,
14 Teile Cetylpolyglykoläther mit 8 Mol Äthylenoxid,
1 Teil Oleylpolyglykoläther mit 5 Mol Äthylenoxid,
2 Teile Spindelöl,
10 Teile Polyäthylenglykol,
23 Teile Wasser.

Der Wirkstoff wird mit den Zuschlagstoffen in dazu geeigneten Geräten innig vermischt und vermahlen. Man erhält eine Paste, aus der sich durch Verdünnen mit Wasser Suspensionen jeder gewünschten Konzentration herstellen lassen.

Emulsionskonzentrat

Zur Herstellung eines 25%igen Emulsionskonzentrates werden

25 Teile eines Wirkstoffes der Formel I,
5 Teile einer Mischung von Nonylphenolpolyoxyäthylen und Calciumdodecylbenzolsulfat,
15 Teile Cyclohexanon,
55 Teile Xylol

miteinander vermischt. Dieses Konzentrat kann mit Wasser zu Emulsionen auf geeignete Konzentrationen von z. B. 0,1 bis 10% verdünnt werden.

Beispiel 3

Versuchsmethoden zur Feststellung der herbiziden Wirkung

Pre-emergente Herbizidwirkung (Keimhemmung)

Im Gewächshaus werden Samen von Versuchspflanzen in Blumentöpfe von ca. 15 cm Durchmesser gesät, so daß sich pro Topf ca. 12—25 Pflanzen entwickeln können. Unmittelbar nach der Einsaat werden die Blumentöpfe mit einer wäßrigen Suspension der Wirkstoffe behandelt, welche durch Verdünnen eines Wirkstoffkonzentrates mit Wasser erhalten wurde. Die Konzentration am Wirkstoff wird so berechnet, daß sie in kg pro Hektar ausgedrückt werden kann. Die Töpfe werden dann im Gewächshaus unter immer den gleichen Bedingungen, 22—25°C Temperatur, 50—70% relative Luftfeuchtigkeit und regelmäßiges Bewässern gehalten. Nach 21 Tagen wird der Versuch ausgewertet und der Zustand der Pflanzen notiert. In Aufwandmengen von 1 kg/ha und mehr, zeigten alle geprüften Verbindungen gute Wirkung gegen die dikotylen Pflanzen und Unkräuter.

Post-emergente Herbizidwirkung (Kontaktherbizid)

Samen von sowohl mono- wie dikotylen Pflanzen und Unkräutern werden im Gewächshaus in Blumentöpfe von ca. 13 cm Durchmesser gesät, so daß sich pro Topf an 12—25 Pflänzchen entwickeln können. Man läßt sie keimen und wenn sie das 4—6-Blatt-Stadium erreicht haben, was ca. 2 Wochen dauert, werden sie mit einer wäßrigen Wirkstoff-Suspension behandelt. Die Wirkstoffsuspension wird durch Verdünnen eines Wirkstoffkonzentrates mit Wasser erhalten. Die aufgetragene Menge Wirkstoff ist so dosiert, daß sie in kg pro Hektar angegeben werden kann. Die Töpfe werden nach der Behandlung im Gewächshaus unter den gleichen Bedingungen wie im pre-emergenten Versuch gehalten. Der Versuch wird 15 Tage nach der Behandlung ausgewertet und der Zustand der Pflanzen notiert. In diesem Versuch haben die geprüften Verbindungen vor allem die dikotylen Pflanzen schwer geschädigt. Teilweise schon bei geringen Aufwandmengen von 0,5 kg pro Hektar.

Im Feldversuch hat die Verbindung 2-Chlor-5-(2′-chlor-4′-trifluormethylphenoxy)-phenyl-acetonitril-oxim (methoxycarbonyl-1″-alkyl)-äther (Beispiel 1) als Selektivherbizid in Weizenkulturen in Aufwandmengen von 1 bis 2 kg schwer zu bekämpfenden Unkräutern der Gattungen Galium, Veronika und Viola vernichtet.

**Patentansprüche**

1. Die Oximäther und Oximester von Diphenyläthern der Formel I

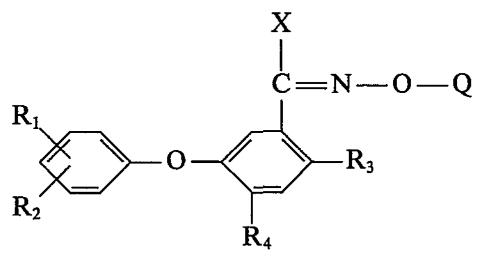

(I)

worin $R_1$ Halogen, oder eine der Gruppen Nitro, Cyan oder Trifluormethyl, $R_2$ und $R_3$ je Wasserstoff, Halogen oder eine der Gruppen Nitro oder Cyan, $R_4$ Wasserstoff oder Halogen, X Wasserstoff, Halogen oder eine der Gruppen Cyan, Nitro, Niederalkyl, Niederalkanoyl, Carbonsäureniederalkylester oder Carbonsäureamid, Q ein niederes Alkyl, das geradkettig oder verzweigt ist oder durch

Heteroatome unterbrochen oder durch Halogen substituiert sein kann, ein niederes Alkenyl oder Halogenalkenyl, ein niederes Alkinyl, ein gegebenenfalls durch Halogen substituiertes $C_3$—$C_7$-Cycloalkyl, ein niederes Cyanalkyl, eine niedere Alkancarbonsäureester-Gruppe, Alkanthiocarbonsäureester-Gruppe, eine niedere Alkancarbonsäureamid-Gruppe, einen aliphatischen Acylrest, einen araliphatischen, cycloaliphatischen oder gegebenenfalls substituierten aromatischen bzw. heterocyclischen Acylrest, einen aliphatischen, araliphatischen, cycloaliphatischen oder gegebenenfalls substituierten aromatischen bzw. heterocyclischen Kohlensäureesterrest, eine Alkylsulfonsäure oder einen Sulfonsäureamidrest oder einen Carbamoylrest bedeutet.

2. Die Oximäther und Oximester von Diphenyläthern der Formel I, Anspruch 1, worin X die Cyanogruppe bedeutet.

3. Die Oximäther und Oximester von Diphenyläthern gemäß Anspruch 1, welche der Formel entsprechen

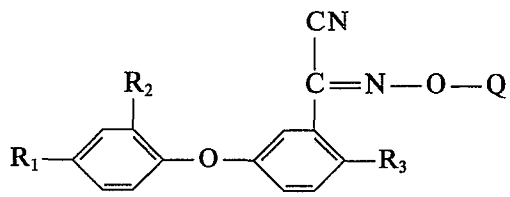

worin $R_1$, $R_2$, $R_3$ und Q die unter Formel I, Anspruch 1 gegebene Bedeutung haben.

4. Die Oximäther und Oximester von Diphenyläther gemäß Anspruch 1 der Formel

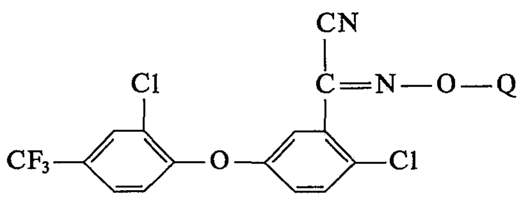

worin Q die im Anspruch 1 gegebene Bedeutung hat.

5. Die Oximäther und Oximester von Diphenyläther gemäß Anspruch 1 der Formel

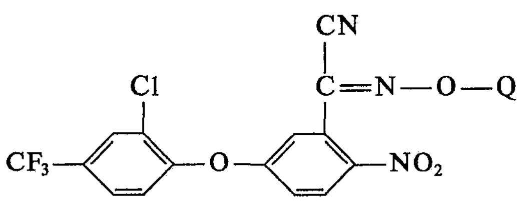

worin Q die im Anspruch 1 gegebene Bedeutung hat.

6. 2-Chlor-5-(2′-chlor-4′-trifluormethyl-phenoxy)-phenyl-acetonitriloxim-methoxycarbonyl-äth-1″-yl-äther.

7. 2-Chlor-5-(2′-chlor-4′-trifluormethyl-phenoxy)-phenyl-acetonitriloxim-isobutyloxycarbonyl-äth-1″-yl-äther.

8. 2-Chlor-5-(2′-chlor-4′-trifluormethyl-phenoxy)-phenyl-acetonitriloxim-methylthiocarbonyl-äth-1″-yl-äther.

9. Verfahren zur Herstellung von Verbindungen der Formel I, in denen X Cyan bedeutet, dadurch gekennzeichnet, daß man in einem inerten, organischen Lösungsmittel in Gegenwart einer Base, ein Oximsalz der Formel VIII

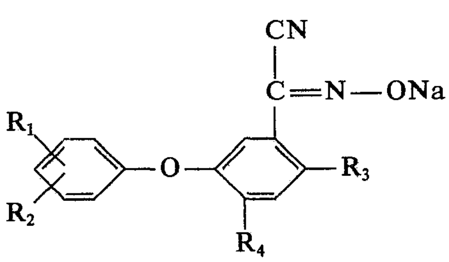

(VIII)

worin $R_1$, $R_2$, $R_3$ und $R_4$ die unter Formel I, Anspruch 1, gegebene Bedeutung haben, mit einer Verbindung der Formel IX umsetzt

$$Y-Q \qquad (IX)$$

worin Y ein Halogenatom oder einen abspaltbaren Säurerest bedeutet.

10. Herbizides Mittel, dadurch gekennzeichnet, daß es als Wirkstoff mindestens einen Oximäther oder Oximester eines Diphenyläthers der Formel I, Anspruch 1, enthält.

11. Die Verwendung der Verbindung der Formel I, Anspruch 1, zur selektiven Bekämpfung von Unkräutern in Kulturpflanzenbeständen.

12. Die Verwendung der Verbindungen der Formel I, Anspruch 1 zur selektiven Bekämpfung von Unkräutern in Getreidekulturen.

## Claims

1. An oxime ether or oxime ester of a diphenyl ether of the formula I

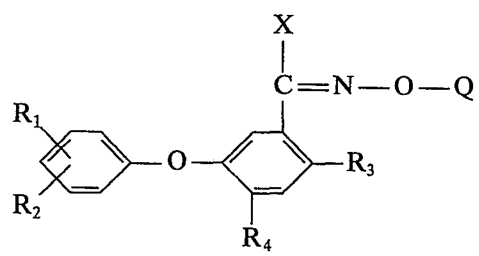

(I)

wherein $R_1$ is halogen or a nitro, cyano or trifluoromethyl group, each of $R_2$ and $R_3$ is hydrogen, halogen, or a nitro or cyano group, $R_4$ is hydrogen or halogen, X is hydrogen, halogen, or a member selected from the group consisting of cyano, nitro, lower alkyl, lower alkanoyl, carboxylic acid lower alkyl ester or carboxamide, Q is lower alkyl which is straight-chain or branched or which can be interrupted by heteroatoms or substituted by halogen; lower alkenyl or haloalkenyl; lower alkenyl; $C_3-C_7$ cycloalkyl which is unsubstituted or substituted by halogen, or is lower cyanoalkyl; a lower alkanecarboxylic acid ester group, an alkanethiocarboxylic acid ester group, a lower alkanecarboxylic acid amide group; an aliphatic acyl radical; an araliphatic, cycloaliphatic or unsubstituted or substituted aromatic or heterocyclic acyl radical; an aliphatic, araliphatic, cycloaliphatic or unsubstituted or substituted aromatic or heterocyclic carbonic acid ester group; an alkylsulfonyl group; a sulfonamide group; or a carbamoyl radical.

2. An oxime ether or oxime ester of a diphenyl ether of the formula I according to claim 1, wherein X is the cyano group.

3. An oxime ether or oxime ester of a diphenyl ether according to claim 1 of the formula

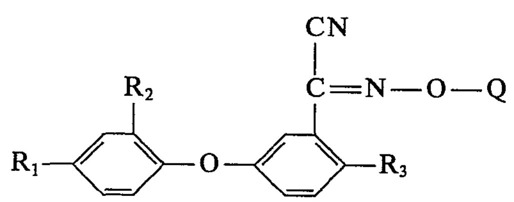

wherein $R_1$, $R_2$, $R_3$ and Q are as defined for formula I in claim 1.

4. An oxime ether or oxime ester of a diphenyl ether according to claim 1 of the formula

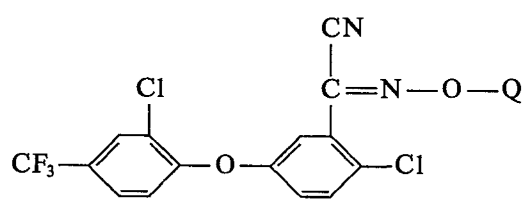

wherein Q is as defined in claim 1.

5. An oxime ether or oxime ester of a diphenyl ether according to claim 1 of the formula

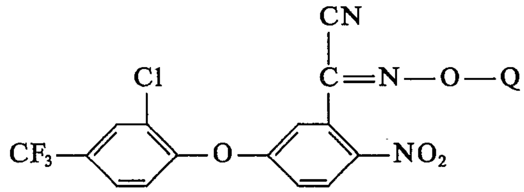

wherein Q is as defined in claim 1.

6. 2-Chloro-5-(2′-chloro-4′-trifluoromethylphenoxy)phenylacetonitrile oxime methoxycarbonyl-eth-1″-yl ether.

7. 2-Chloro-5-(2′-chloro-4′-trifluoromethylphenoxy)phenylacetonitrile oxime isobutoxycarbonyl-eth-1″-yl ether.

8. 2-Chloro-5-(2′-chloro-4′-trifluoromethylphenoxy)phenylacetonitrile oxime methylthiocarbonyl-eth-1″-yl ether.

9. A process for the production of a compound of the formula I, in which X is cyano, which process comprises reacting an oxime salt of the formula VIII

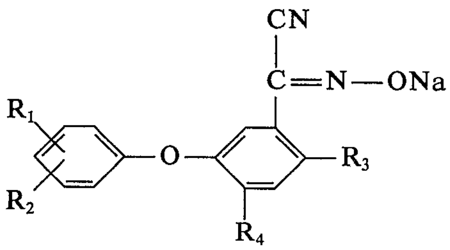

(VIII)

wherein $R_1$, $R_2$, $R_3$ and $R_4$ are as defined for formula I in claim 1, in an inert organic solvent and in the presence of a base, with a compound of the formula IX

$$Y-Q \qquad (IX)$$

wherein Y is a halogen atom or a removable acid radical.

10. A herbicidal composition which contains, as active ingredient, at least one oxime ether or oxime ester of a diphenyl ether of the formula I according to claim 1.

11. A method of selectively controlling weeds in crops of cultivated plants, which comprises applying to said crops a herbicidally effective amount of a compound of the formula I according to calim 1.

12. A method of selectively controlling weeds in cereals crops, which comprises applying to said crops a herbicidally effective amount of a compound of the formula I according to claim 1.

**Revendications**

1. Les éthers-oxime et esters-oxime d'éthers diphényliques de la formule I

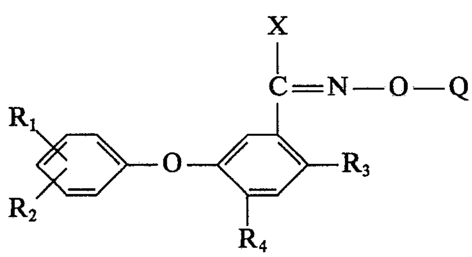

(I)

dans laquelle $R_1$ représente un halogène ou l'un des groupes nitro, cyano ou trifluorométhyle, $R_2$ et $R_3$ chacun l'hydrogène, un halogène ou l'un des groupes nitro ou cyan, $R_4$ l'hydrogène ou un halogène, X l'hydrogène, un halogène ou l'un des groupes cyano nitro, alkyle inférieur, alcanoyle inférieur, ester carboxylique d'alkyle inférieur ou amide carboxylique Q un alkyle inférieur qui est à chaîne droite ou ramifiée ou dont la chaîne peut être interrompue par des hétéroatomes ou substitutée par un halogène, un alkényle ou halogénoalkényle inférieur, un alkinyle inférieur, un cycloalkyle-$C_3-C_7$

éventuellement substitué par un halogène, un cyanalkyle inférieur, un groupe ester-alcane carboxylique inférieur, un groupe ester-alcane thiocarboxylique un groupe alcane-carbamide inférieur, un reste acyle aliphatique, un reste acyle araliphatique, cyclo-aliphatique ou un reste acyle aromatique ou hétérocyclique éventuellement substitué, un reste ester carbonique aliphatique, araliphatique, cycloaliphatique, ou un reste ester carbonique aromatique ou hétérocyclique éventuellement substitué, un radical d'acide alkylsulfonique ou un reste amide sulfonique ou un reste carbamoyle.

2. Les éthers-oxime et esters-oxime d'éthers diphényliques de la formule I, revendication 1, dans laquelle X représente le groupe cyano.

3. Les éthers-oxime et esters-oxime d'éthers diphénylique suivant la revendication I qui correspondent à la formule

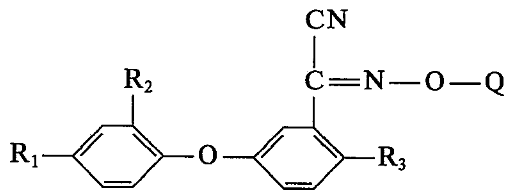

dans laquelle $R_1$, $R_2$, $R_3$ et Q ont la signification indiquée pour la formule I, revendication I.

4. Les éthers-oxime et esters-oxime d'éther diphénylique suivant la revendication I, de formule

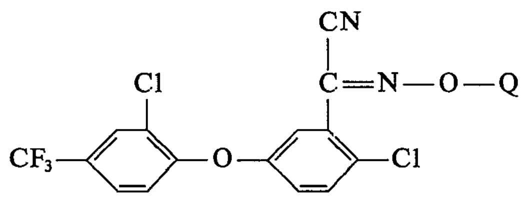

dans laquelle Q a la signification indiquée dans la revendication I.

5. Les éthers-oxime et esters-oxime de diphényléther suivant la revendication I, de formule

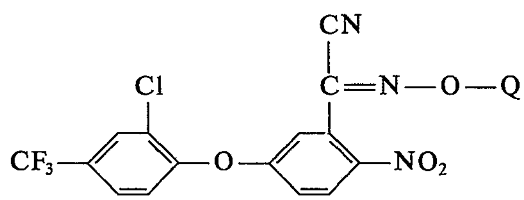

dans laquelle Q a la signification indiquée dans la revendication I.

6. Ether 2-chloro-5-(2'-chloro-4'-trifluorméthyl-phénoxy)-phényl-acétonitriloxime-méthoxycarboxyl-éthylique-1''.

7. Ether 2-chloro-5-(2'-chloro-4'-trifluorométhyl-phénoxy)-phényl-acétonitriloxime-isobutyloxycarbonyl-éthylique-1''.

8. Ether 2-chloro-5-(2'-chloro-4'-trifluorméthyl-phénoxy)-phényl-acétonitriloxime-méthylthiocarbonyl-éthylique-1''.

9. Procédé de préparation de composés de la formule I, dans lesquelles X représente le radical cyano, caractérisé par le fait qu'on fait réagir dans un solvant organique inerte, en présence d'une base, un sel d'oxime de la formule VIII

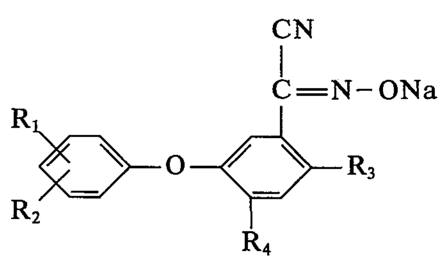

(VIII)

dans laquelle $R_1$, $R_2$, $R_3$ et $R_4$ ont la signification indiquée pour la formule I, revendication 1, avec un composé de formule IX

$$Y{-}Q \qquad (IX)$$

dans laquelle Y représente un atome d'halogène ou un radical acide qu'il sépare.

10. Agent herbicide caractérisé par le fait qu'il contient comme substance active au moins un éther-oxime ou ester-oxime d'un éther diphénylique de formule I, revendication 1.

11. L'utilisation des composés de formule I, revendication 1, pour la lutte sélective contre les mauvaises herbes dans la culture des plantes.

12. L'utilisation des composés de formule I, revendication 1, pour la lutte sélective contre les mauvaises herbes dans la culture des céréales.